# EUROPÄISCHE PATENTANMELDUNG

(11) **EP 0 942 179 A1**
(43) Veröffentlichungstag der Anmeldung: **15.09.1999**
(21) Anmeldenummer: 99104432.2
(22) Anmeldetag: 05.03.1999
(51) Int. Cl.: F16B 15/00

(54) **Holzverbinder**

(30) Priorität: 09.03.1998 DE 29804090 U
(71) Anmelder: MiTek Industries GmbH, 63128 Dietzenbach (DE)
(72) Erfinder: Litze, Harald, Gross Umstadt/Wiebelsbach (DE)
(74) Vertreter: Zwirner, Gottfried, Dipl.-Ing. Dipl.-W.-Ing.

(57) **Zusammenfassung**

Holzverbinder wischen stumpf aneinanderstoßenden Hölzern (21, 22), die sich auf oder in der Nähe eines Balkens (23) stoßen. Die Hölzer (21, 22) werden von wenigstens einer Metall-Lochplatte (10) überbrückt, die sowohl an die Hölzer (21, 22) angenagelt als auch durch die Hölzer hindurch mit einer Schraube (4) oder einem langen Nagel (15, 16, 17, 18) befestigt ist.

## Beschreibung

Die Erfindung bezieht sich auf einen Holzverbinder zwischen benachbarten, stumpf aneinanderstoßenden Hölzern, insbesondere Dachlatten und/oder Pfetten, die an einer Holztragkonstruktion zu befestigen sind.

Geneigte Dächer werden gewöhnlich mit Eindeckungsmaterial bedeckt, die Dachlatten voraussetzen. Die Dachlatten werden an den Sparren befestigt, und es muß genau darauf geachtet werden, daß sich die Dachlatten auf Mitte der Sparren stoßen. Der Materialaufwand von Dachlatten und die Montagezeit werden dadurch erhöht.

Der Erfindung liegt die Aufgabe zugrunde, den Materialaufwand von Dachlatten und/oder Pfetten und anderen Holzbauteilen zu verringern, gleichzeitig die Montagezeit der Hölzer zu verkürzen und den zug- und druckfesten sowie den querkraftschlüssigen Anschluß an die Unterkonstruktion zu gewährleisten.

Die gestellte Aufgabe wird aufgrund der Merkmale des Anspruchs 1 gelöst und durch die weiteren Merkmale der Unteransprüche ausgestaltet und weiterentwickelt.

Die sich stumpf stoßenden Dachlatten oder Hölzer werden durch wenigstens eine Metall-Lochplatte überbruckt, die mit Nagelausbildungen versehen ist oder mit kurzen Nägeln befestigt werden kann. Die Nagelausbildungen können durch Stanzen der Lochungen der Metallplatte gewonnen werden. Damit lassen sich Dachlatten miteinander verbinden, jedoch reicht die Verbindungskraft nicht aus, auftretende Belastungen sicher zu übertragen. Zu diesem Zweck ist ein längerer Nagel oder eine Holzschraube vorgesehen, die durch eine passende Lochung der Metall-Lochplatte hindurchreicht und bis in die Holztragkonstruktion getrieben wird. Auf diese Weise ist es möglich, die Lasten in die Holztragkonstruktion einzuleiten. Die Metall-Lochplatte stellt gewissermaßen eine Verbreiterung des Kopfes des Nagels oder der Holzschraube dar und wirkt so auf beide benachbarte und sich stoßende Hölzer.

Es kann eine Metall-Lochplatte pro Stumpfstoß verwendet werden, es ist jedoch auch möglich, bis zu vier Metall-Lochplatten pro Stumpfstoß zu verwenden. Zur Verankerung braucht jedoch jeweils nur ein einziger längerer Nagel oder eine längere Schraube, die bis in die Unterkonstruktion reicht, verwendet zu werden.

Der Stumpfstoß muß nicht unbedingt über der Unterkonstruktion liegen, es ist auch möglich, daß der Stumpfstoß neben der Holztragkonstruktion angeordnet ist, solange nur die Metall-Lochplatte genügend lang ist, bis über die Holztragkonstruktion zu reichen, um an dieser Überdeckungsstelle den längeren Nagel oder die längere Schraube einzutreiben.

Die Erfindung wird anhand der Zeichnungen beschrieben. Dabei zeigt:
- Fig. 1: eine Nagelplatte,
- Fig. 2: eine Hammerplatte vor ihrer Benutzung,
- Fig. 3: die Hammerplatte im Einsatz,
- Fig. 4: eine Holzschraube zur Verwendung mit einer Metall-Lochplatte, von der Seite und von oben gesehen,
- Fig. 5: vier verschiedene Nägel zur Verwendung mit der Metall-Lochplatte,
- Fig. 6: einen Holzverbinder zur Verbindung zweier Latten auf einer Unterkonstruktion mit einer Metall-Lochplatte,
- Fig. 7: eine Ausführungsform mit zwei Metall-Lochplatten und
- Fig. 8: eine Ausführungsform mit vier Metall-Lochplatten.

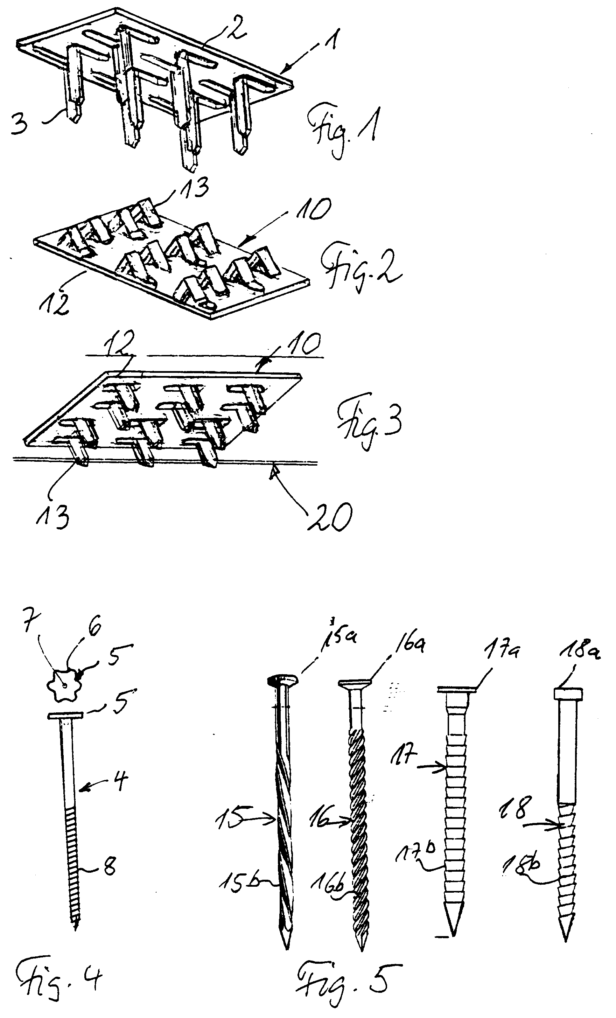

Fig. 1 stellt eine sogenannte Nagelplatte 1 dar, bei der das Material von länglichen Lochungen 2 umgebogen ist, um mittellange Nagelausbildungen 3 darzustellen. Zum Setzen derartiger Nagelplatten benötigt man Pressen. Dies bedeutet, daß man eine derartige Nagelplatte 1 nur eingeschränkt anwenden kann, da eine Presse nicht gut auf ein Dach transportiert werden kann.

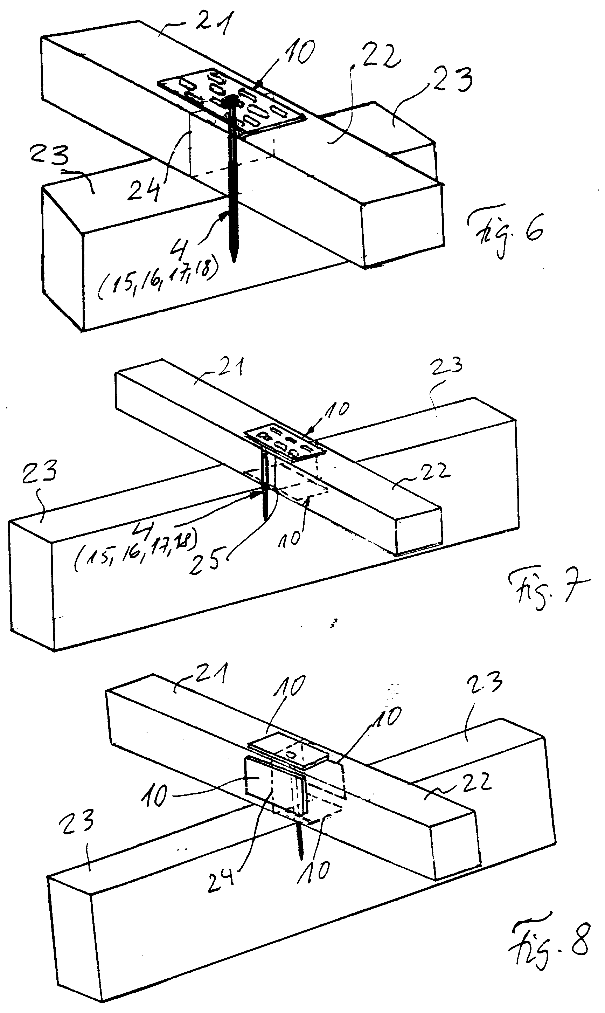

Fig. 2 zeigt eine sogenannte Hammerplatte 10 vor dem Setzen. Auch hier gibt es längliche Lochungen 12, deren Material zu hakenförmigen Nagelausbildungen 13 geformt worden ist. Diese Nagelausbildungen 13 können einzeln in Holz 20 eingetrieben werden, wie dies Fig. 3 zeigt.

Metallplatten mit Lochungen werden allgemein als Metall-Lochplatten bezeichnet; die Nagelplatte 1 und die Hammerplatte 10 gehören hierzu.

Fig. 4 zeigt eine Holzschraube 4 mit breitem, flachem Kopf 5, der einen wellenförmigen Umriß aufweist, um durch Flankenausbildungen 6 die Holzschraube mit einem größeren Einschraubmoment antreiben zu können. Der Kopf 5 weist ein Führungsloch 7 entlang seiner mittigen Achse auf, an welchem das Eindrehwerkzeug eingreifen kann, um es zu stabilisieren, während der Antrieb über die Flanken 6 erfolgt. Der Schaft 8 zeigt selbstschneidendes Holzgewinde.

In Fig. 5 sind zwei Schraubnägel 15,16, ein Rillennagel 17 und ein Schraubrillennagel 18 dargestellt, die ebenfalls im Zusammenhang mit Metall-Lochplatten verwendet werden können.

Fig. 6 zeigt den Stoß zweier Dachlatten 21,22 über einer Holzunterkonstruktion 23. Die Stumpfstoßfuge ist mit 24 bezeichnet. Wie ersichtlich, überbrückt die Lochplatte, hier als Hammerplatte 10 ausgebildet, diese Stumpfstoßfuge 24, welche im übrigen längs der Mitte der Unterkonstruktion 23 verläuft. Die Schraube 4 ist durch eine passende Lochung 12 der Hammerplatte bis in die Unterkonstruktion 23 hineingetrieben und stellt somit ein Verankerungselement dar; dabei kann es sich auch um einen der Nageltypen 15,16,17 oder 18 handeln. Durch die Anordnung der Hammerplatte 10 über dem Auflager der Dachlatten, gebildet durch die Unterkonstruktion 23, kann auch ein Biegemoment übertragen werden. Gleichzeitig dient die Lochplatte dem Kopf des Verankerungselements 4 oder 15,16,17,18 als Verstärkung, welche ein Einpressen des Kopfes unter Zuglast in das Querholz der Unterkonstruktion 23 verhindert. Über das lange Verankerungselement 4 bzw. 15,16,17 oder 18 wird ferner der Windsog und auch die Dachschublast sicher in die Unterkonstruktion 23 eingeleitet.

Fig. 7 zeigt die Anwendung von zwei Hammerplatten 10 zur Verbindung zweier Dachlatten 21,22, deren Stoßfuge 25 außerhalb der Überdeckung mit der Unterkonstruktion 23 liegt. Das Verankerungselement 4 bzw. 15,16,17,18 ist durch zwei fluchtende Lochungen 12 der Hammerplatten 10 getrieben und mit dem unteren Ende in der Unterkonstruktion 23 verankert. Dadurch können die Belastungen noch besser aufgenommen werden, wie im Zusammenhang mit Fig. 6 beschrieben.

Fig. 8 zeigt die Anwendung von vier Hammerplatten 10, nämlich auf jeder Seite der Hölzer 21,22 eine Hammerplatte. Die Stoßfuge 24 verläuft hier wiederum entlang der Mitte der Unterkonstruktion 23. Es versteht sich, daß mit vier Hammerplatten besonders schwere Belastungen übertragen werden können.

Anstelle der Nagelplatte 1 oder der Hammerplatte 10 können auch Metall-Lochplatten im Zusammenwirken mit separaten kurzen Nägeln verwendet werden, die einzeln einzutreiben sind und kürzer als die Dicke der Dachlatten 21, 22 sind. Auch hier wird ein längeres Schraub- oder Nagelelement 4 bzw. 15,16,17,18 dazu verwendet, die Verbindung mit der Unterkonstruktion 23 herzustellen.

## Patentansprüche

1. Holzverbinder zwischen benachbarten, stumpf aneinanderstoßenden Hölzern (21,22), insbesondere Dachlatten und/oder Pfetten, die an einer Holztragkonstruktion (23) zu befestigen sind, mit folgenden Merkmalen:
mindestens eine Metall-Lochplatte (1,10), die den Stumpfstoß (24,25) zwischen angrenzenden Hölzern (21, 22) überbrückt, wobei der Stumpfstoß (24,25) entweder in Überdeckung (24) mit der Holztragkonstruktion (23) oder nahe benachbart (25) zu dieser angeordnet ist;
eine Reihe von Nagelausbildungen (3,13) oder kurzen Nägeln, die zur Befestigung der Metall-Lochplatte durch deren Lochungen (2,12) hindurch an den benachbarten Hölzern (21,22) ausgebildet sind;
ein Verankerungselement (4; 15 bis 18), das einen Kopf (5, 15a bis 18a) und einen Schaft (8, 15b bis 18b) aufweist, und mit dem Schaft durch eine Lochung (2,12) der Lochplatte (1c) hindurchreicht und in der Holztragkonstruktion (23) verankert ist.

2. Holzverbinder nach Anspruch 1, dadurch gekennzeichnet, daß das Verankerungselement als Schraubnagel (15,16) ausgebildet ist.

3. Holzverbinder nach Anspruch 1, dadurch gekennzeichnet, daß das Verankerungselement als Rillennagel (17) ausgebildet ist.

4. Holzverbinder nach Anspruch 1, dadurch gekennzeichnet, daß das Verankerungselement als Schraubrillennagel (18) ausgebildet ist.

5. Holzverbinder nach Anspruch 1, dadurch gekennzeichnet, daß das Verankerungselement als Holzschraube (4) mit breitem, flachem Kopf (5) sowie mit Flankenausbildungen (6) darstellt, um das Einschraubmoment auf die Holzschraube zu übertragen.

6. Holzverbinder nach Anspruch 5, dadurch gekennzeichnet, daß der Kopf (5) ein Führungsloch (6) entlang der mittleren Achse aufweist.

7. Holzverbinder nach einem der Ansprüche 1 bis 6, dadurch gekennzeichnet, daß die Metall-Lochplatte als Hammerplatte (10) mit einzelnen einschlagbaren, hakenförmigen Nagelausbildungen (13) ausgebildet ist, die aus dem Material der Lochungen (12) gewonnen sind.

8. Holzverbinder nach einem der Ansprüche 1 bis 7, dadurch gekennzeichnet, daß sowohl die der Holztragkonstruktion (23) benachbarte Seiten der stumpf aneinanderstoßenden Hölzer (21,22) als auch die abgewandten Seiten jeweils eine Metall-Lochplatte (10) aufweisen, wobei das Verankerungselement (4; 15 bis 18) durch zueinander fluchtende Lochungen (2,12) dieser Lochplatten hindurchreicht.

9. Verbinder nach Anspruch 8, dadurch gekennzeichnet, daß auch die Verbindungsseiten der stumpf aneinanderstoßenden Hölzer (21,22) mit Lochplatten (10) versehen sind.
